# EUROPÄISCHE PATENTSCHRIFT

(11) **EP 2 445 779 B1**
(45) Veröffentlichungstag und Bekanntmachung des Hinweises auf die Patenterteilung: **31.05.2017**
(21) Anmeldenummer: 10744864.9
(22) Anmeldetag: 22.06.2010
(51) Int. Cl.: B62K 19/06

(54) **RAHMEN FÜR EIN FAHRRAD**
FRAME FOR A BICYCLE
CADRE POUR UNE BICYCLETTE

(30) Priorität: 22.06.2009 DE 102009030051
(43) Veröffentlichungstag der Anmeldung: 02.05.2012
(73) Patentinhaber: Nicol, Morgan, 6926 Montagola (CH)
(72) Erfinder: Nicol, Morgan, 6926 Montagola (CH)
(74) Vertreter: BSB Intellectual Property Law
(86) Internationale Anmeldenummer: PCT/EP2010/003756
(87) Internationale Veröffentlichungsnummer: WO 2010/149340

(56) Entgegenhaltungen:
- WO-A1-97/45315
- WO-A1-2008/056204
- CA-A1- 2 270 336
- FR-A1- 2 793 758

## Beschreibung

Die vorliegende Erfindung betrifft einen Rahmen für ein Fahrrad und ein Fahrrad.

Aus der CA2270336A1 ist ein Rahmen für ein Fahrrad mit einem Rahmenkörper bekannt, wobei der Rahmenkörper ein Oberrohr und ein Unterrohr, sowie eine das Oberrohr und das Unterrohr verbindende Stützeinrichtung aufweist, wobei die Stützeinrichtung eine Durchströmöffnung aufweist, durch welche im bestimmungsgemäßen Gebrauch ein Teil der auftreffenden Luft durchströmt.

Im Stand der Technik sind verschiedenste Rahmen für Fahrräder bekannt geworden, wie beispielsweise Kreuzrahmen, Trapezrahmen und insbesondere Diamantrahmen, die eine günstige Kombination aus Stabilität und Gewicht aufweisen.

Ein typischer Diamantrahmen wird geometrisch etwa aus einem Trapez und einem Dreieck gebildet. Das Trapez bildet dabei den Rahmenkörper oder Hauptrahmen und besteht aus einem Oberrohr und einem Unterrohr, sowie aus einem Steuer- und einem Sitzrohr, die das Ober- und das Unterrohr verbinden. Im hinteren Bereich ist etwa ein geometrisches Dreieck vorgesehen, welches als Hinterbau bezeichnet wird und die Sitzstreben, die Kettenstreben und das Sitzrohr umfasst. Neben den genannten Rahmenformen gibt es auch weitere Rahmenformen, die sich in Anordnung und Struktur unterscheiden.

Gemeinsam ist allen Rahmen, dass sie von vorn betrachtet die bei der Fahrt auftretende Luftströmung zur Seite wegleiten, wo die umgeleitete Luftströmung auf die Beine der Fahrer auftrifft. Dadurch wird ein zusätzlicher Luftwiderstand erzeugt, da sich eine erhebliche Verwirbelung der Luftströmung im Bereich der Beine des Fahrers ergibt.

Es ist deshalb die Aufgabe der vorliegenden Erfindung, einen Rahmen für ein Fahrrad zur Verfügung zu stellen, womit ein geringerer Luftwiderstand bei der Fahrt ermöglicht wird.

Diese Aufgabe wird gelöst durch einen Rahmen mit den Merkmalen des Anspruchs 1. Bevorzugte Weiterbildungen sind Gegenstand der jeweiligen Unteransprüche. Weitere Vorteile und Merkmale der Erfindung ergeben sich aus dem Ausführungsbeispiel.

Der erfindungsgemäße Rahmen ist für ein Fahrrad vorgesehen und weist einen Rahmenkörper auf. Der Rahmenkörper umfasst wenigstens ein Oberrohr und wenigstens ein Unterrohr, sowie wenigstens eine das Oberrohr und das Unterrohr verbindende Stützeinrichtung. Erfindungsgemäß weist die wenigstens eine Stützeinrichtung eine Durchströmöffnung auf, durch welche bei bestimmungsgemäßem Gebrauch wenigstens ein Teil der auftreffenden Luft durchströmt.

Der erfindungsgemäße Rahmen hat viele Vorteile. Ein erheblicher Vorteil des erfindungsgemäßen Rahmens ist, dass die das Oberrohr und das Unterrohr verbindende Stützeinrichtung eine Durchströmöffnung aufweist, sodass im bestimmungsgemäßen Gebrauch auf den Rahmen von vorn auftreffende Luft nicht vollständig zu den beiden Seiten des Rahmens gelenkt wird, sondern wenigstens zu einem bedeutenden Teil auch durch die Durchströmöffnung des Rahmens durchgeleitet wird. Dadurch wird ein erheblicher Vorteil erzielt, da die durch die Durchströmöffnung durchgeleitete Luft keinen erhöhten Luftwiderstand an den Beinen des Fahrers verursacht. Ein solcher Luftwiderstand wird bei konventionellen Rahmentypen erzeugt, da die vorn auf den Rahmen auftreffende Luft seitlich umgelenkt wird und folglich insbesondere auf die Beine des Fahrers auftrifft.

In einer einfachen Ausgestaltung ist der erfindungsgemäße Rahmen für ein Fahrrad vorgesehen und wird im Wesentlichen aus einem Rahmenkörper, der gelegentlich auch als Hauptkörper bezeichnet wird, gebildet. Dabei weist der Rahmenkörper wenigstens ein Oberrohr und wenigstens ein Unterrohr, sowie wenigstens ein das Oberrohr und das Unterrohr verbindendes Sitzrohr und wenigstens ein das Oberrohr und das Unterrohr verbindendes Steuerrohr auf. Dabei ist in dem Steuerrohr wenigstens eine Durchströmöffnung vorgesehen, durch die im bestimmungsgemäßen Gebrauch wenigstens ein Teil der während der Fahrt von vorn auftreffenden Luft durchströmt. Das Sitzrohr kann zur Aufnahme einer z.B. höhenverstellbaren Sattelstütze dienen. An dem Steuerrohr kann die Gabel drehbeweglich aufgenommen werden.

Vorzugsweise erstreckt sich die Durchströmöffnung wenigstens im Wesentlichen in Längsrichtung des Rahmens.

Insbesondere ist der Rahmenkörper insgesamt aerodynamisch geformt, um neben der günstigen Durchleitung der auftreffenden Luft insgesamt noch einen geringen Windwiderstand zu ermöglichen.

Erfindungsgemäß ist in einem vorderen Bereich des Rahmenkörpers eine Steuerstützeinrichtung als Stützeinrichtung vorgesehen. In der Steuerstützeinrichtung ist eine Durchströmöffnung vorgesehen, um von vorn auf dem Rahmen auftreffende Luft wenigstens teilweise durch die Durchströmöffnung der Steuerstützeinrichtung durchzuleiten.

In weiteren bevorzugten Ausgestaltungen ist in einem hinteren Bereich dieses Rahmenkörpers wenigstens eine Sitzstützeinrichtung als Stützeinrichtung vorgesehen, wobei es dann wiederum bevorzugt ist, dass wenigstens eine Durchströmöffnung an der Sitzstützeinrichtung vorgesehen ist.

In allen Ausgestaltungen ist es möglich, dass an einer Stützeinrichtung mehr als eine Durchströmöffnung angeordnet ist. Beispielsweise können zwei, drei oder vier nebeneinander oder symmetrisch zueinander angeordnete Durchströmöffnungen vorgesehen sein. Beispielsweise kann es aus Stabilitätsgründen sinnvoll oder erforderlich sein, die Größe der Durchströmöffnung insgesamt zu begrenzen, sodass zwei oder drei oder mehr voneinander getrennte und jeweils kleinere Durchströmöffnungen einen insgesamt günstigen aerodynamischen Effekt bei einer ausreichenden Stabilität erzielen.

Erfindungsgemäß ist wenigstens eine Durchströmöffnung und vorzugsweise ist wenigstens ein Teil der Durchströmöffnungen an der Steuerstützeinrichtung und an der Sitzstützeinrichtung zueinander ausgerichtet angeordnet. Eine solche Ausgestaltung bietet den erheblichen Vorteil, dass die durch die Durchströmöffnung der Steuerstützeinrichtung durchgeleitete Luft zu der Durchströmöffnung der Sitzstützeinrichtung geleitet wird. Dadurch wird eine besonders günstige aerodynamische Form erzielt, da die von vorn auftreffende Luft durch die Durchströmöffnung der Steuerstützeinrichtung durchgeleitet und anschließend durch die Durchströmöffnung der Sitzstützeinrichtung weiter transportiert wird, sodass die durchströmende Luft nur einen besonders geringen Luftwiderstand verursacht.

In bevorzugten Weiterbildungen ist die Steuerstützeinrichtung aerodynamisch gestaltet und weist wenigstens zwei seitliche Steuerrohre oder Steuerabschnitte auf, von denen jeweils wenigstens ein Steuerrohr bzw. Steuerabschnitt auf jeweils einer Seite der Durchströmöffnung angeordnet ist. Beispielsweise kann die Steuerstützeinrichtung insgesamt als ein Steuerprofil mit einem etwa runden Querschnitt ausgeführt sein, wobei in dem Bereich der Durchströmöffnung sich in Längsrichtung des Rahmens die Durchströmöffnung erstreckt, sodass sich seitlich neben der Durchströmöffnung Steuerrohre oder Steuerabschnitte erheben, die den unteren Teil der Steuerstützeinrichtung mit dem oberen Teil der Steuerstützeinrichtung verbinden.

Vorzugsweise ist ein Querschnitt der Durchströmöffnung in der Steuerstützeinrichtung etwa oval oder abgerundet ausgestaltet. Die Höhe der Durchströmöffnung kann in zehn oder zwanzig Zentimeter oder dergleichen betragen, während die Breite der Durchströmöffnung sich aus der Breite des Rahmens ergibt und typischerweise einige Zentimeter beträgt. Beispielsweise sind Querschnittsbreiten von zwei bis etwa zehn Zentimeter möglich und bevorzugt.

Die seitlichen Steuerrohre weisen vorzugsweise einen abgerundeten Querschnitt auf, wobei sie sich an die Längsrichtung des Rahmens länger erstrecken als in Querrichtung.

Vorzugsweise ist die Durchströmöffnung insgesamt etwa düsenartig gestaltet, sodass eine auftreffende Luftströmung gezielt durchgeleitet wird.

In allen Ausgestaltungen ist es bei der Durchströmöffnung in der Steuerstützeinrichtung bevorzugt, dass an der Steuerstützeinrichtung ein oberes und ein unteres Lager oder ein unterer und ein oberer Auflagerpunkt vorgesehen sind. Vorzugsweise weist dann ebenfalls der Gabelsteuerabschnitt der Gabel wenigstens eine Durchströmöffnung auf, wobei die Durchströmöffnung des Gabelsteuerabschnitts zu der Durchströmöffnung der Steuerstützeinrichtung ausgerichtet ist, um eine Weiterleitung der auf die Durchströmöffnung des Gabelsteuerabschnitts auftreffenden Luft zu gewährleisten.

Dabei wird die Durchströmöffnung des Gabelsteuerabschnitts seitlich von Gabelsteuerrohren oder dergleichen begrenzt.

Vorzugsweise ist die Durchströmöffnung der Sitzstützeinrichtung zu der Durchströmöffnung der Steuerstützeinrichtung ausgerichtet, um bei einem bestimmungsgemäßen Gebrauch wenigstens einen Teil der durch die Steuerstützeinrichtung durchgeleiteten Luft anschließend durch die Durchströmöffnung der Sitzstützeinrichtung zu leiten.

Insbesondere sind die Durchströmöffnungen der Steuerstützeinrichtung, des Gabelsteuerabschnitts und der Sitzstützeinrichtung derart gestaltet, dass die vorn auf die Durchströmöffnung des Gabelsteuerabschnitts auftreffende Luft gezielt durch die Durchströmöffnung der Sitzstützeinrichtung durchgeleitet wird.

In einfachen Ausgestaltungen kann die Sitzstützeinrichtung jeweils als Sitzrohr und die Steuerstützeinrichtung als Steuerrohr ausgebildet sein, in denen dann jeweils entsprechende Durchströmöffnungen vorgesehen sind.

In weiteren bevorzugten Ausgestaltungen sind in den mit den vorderen Ausfallenden verbundenen Gabelrohren Luftleitöffnungen vorgesehen, die von vorn auf die mit den Ausfallenden versehenen Gabelrohren auftreffende Luft seitlich an den Beinen des Fahrers vorbeileiten.

In dem Lenker können Luftleiteinrichtungen vorgesehen sein, die eine aerodynamisch günstige Struktur erlauben.

Vorzugsweise kann auch wenigstens eine Durchströmöffnung an der Gabel und/oder dem Lenker vorgesehen sein.

Weitere vorteilhafte Merkmale und Ausgestaltungen der Erfindung ergeben sich aus dem nachfolgenden Ausführungsbeispiel dargestellt, welches nun mit Bezug auf die beiliegenden Figuren beschrieben wird.

Darin zeigen:
- Fig. 1: eine Seitenansicht eines mit einem erfindungsgemäßen Rahmen ausgerüsteten Fahrrads;
- Fig. 2: eine perspektivische Vorderansicht des Fahrrads nach Fig. 1;
- Fig. 3: eine perspektivische Ansicht des vorderen Rahmenbereichs;
- Fig. 4: eine perspektivische hintere Teilansicht des Fahrrads nach Fig. 1; und
- Fig. 5: eine stark schematische Seitenansicht der Verbindung der Gabel mit dem Rahmen.

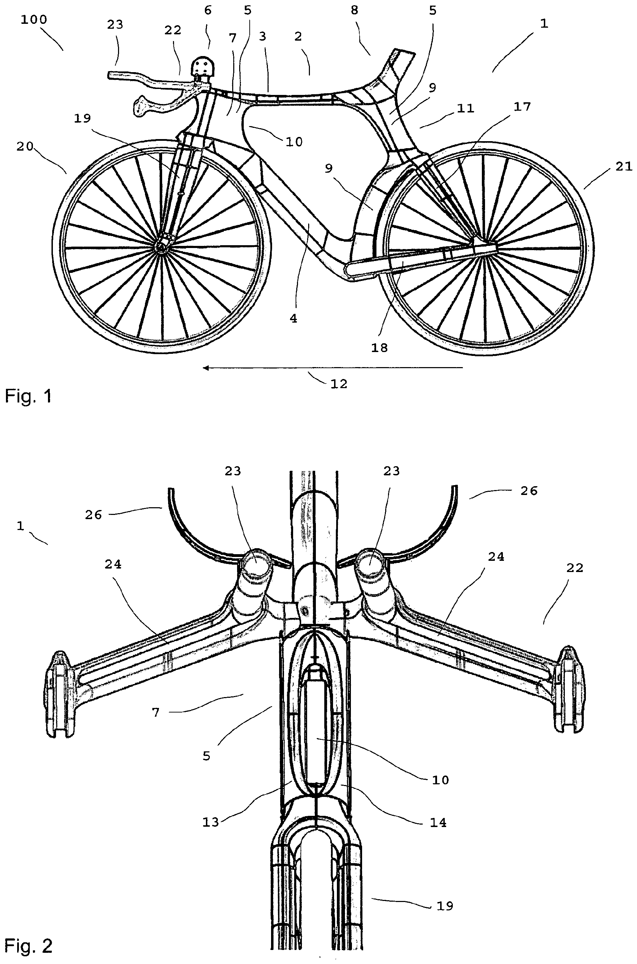

Mit Bezug auf die Figuren 1-5 wird im folgenden Ausführungsbeispiel ein erfindungsgemäßes Fahrrad 100 erläutert, das einen Rahmen 1 umfasst.

Wie in Figur 1 in einer Seitenansicht des Fahrrads 100 dargestellt, weist das Fahrrad 100 ein Vorderrad 20 und ein Hinterrad 21 und einen Rahmen 1 auf, der einen Rahmenkörper 2 umfasst. Der Rahmenkörper 2 wird hier durch ein Oberrohr 3, ein Unterrohr 4 und zwei Stützeinrichtungen 5 gebildet, von denen die vordere Stützeinrichtung 5 als Steuerstützeinrichtung 7 und die hintere Stützeinrichtung 5 als Sitzstützeinrichtung 9 ausgebildet sind. In einfachen Ausgestaltungen ist die Steuerstützeinrichtung 7 als Steuerrohr und die hintere Sitzstützeinrichtung 9 als Sitzrohr ausgebildet.

Sowohl die Steuerstützeinrichtung 7 als auch Sitzstützeinrichtung 9 müssen keinen rotationssymmetrischen Querschnitt aufweisen, sondern sind insbesondere insgesamt aerodynamisch geformt. Sowohl der Steuerstützabschnitt 7 als auch die Sitzstützeinrichtung 9 müssen nicht gerade ausgerichtet sein, sondern können auch eine gebogene oder gewinkelte Struktur aufweisen, so wie dies beispielsweise bei der Sitzstützeinrichtung 9 in Figur 1 klar erkennbar der Fall ist.

Am oberen Ende geht die Sitzstützeinrichtung 9 hier im hinteren Bereich 8 in eine Sattelstütze 27 über.

Im hinteren Bereich 8 des Rahmens 1 bilden die Kettenstreben 18 und die Sitzstreben 17 mit einem Teil der Sitzstützeinrichtung 9 eine etwa dreieckige Struktur, die an dem Verbindungspunkt der Sitzstreben 17 und der Kettenstreben 18 das Hinterrad 21 an Ausfallenden aufnimmt.

Im vorderen Bereich 6 des Rahmens 1 ist am oberen Ende der Steuerstützeinrichtung 7 der Lenker 22 vorgesehen, der hier ebenfalls eine aerodynamische Form aufweist und in den seitlichen Bereichen Luftleiteinrichtungen 24 aufweisen kann. An dem Lenker 22 können Aerostützen 23 und Auflieger 26 angeordnet sein, wobei der Benutzer beim Ergreifen der Aerostützen 23 eine aerodynamisch günstige Sitzposition annehmen kann und seine Unterarme auf den Aufliegern 26 abstützen kann.

Das Vorderrad 20 wird von der Gabel 19 gestützt, die an der Steuerstützeinrichtung 7 drehbar aufgenommen ist.

In Figur 2 ist eine Teil-Vorderansicht des Fahrrads 100 dargestellt, wobei im oberen Bereich der Lenker 22 mit den Luftleiteinrichtungen 24 und den Aufliegern 26, sowie den Aerostützen 23 sichtbar ist, während sich im unteren Bereich die Gabel 19 erstreckt. Klar erkennbar ist, dass die als Steuerstützeinrichtung 7 ausgeführte Stützeinrichtung 5 eine Durchströmöffnung 10 aufweist, durch die von vorn auf den Rahmen 1 auftreffende Luft durchgeleitet wird. Dies erfolgt im Unterschied zum Stand der Technik, wo die vorn auf einen Rahmen auftreffende Luft seitlich um den Rahmen herumgelenkt wird.

Hier ist vor der Steuerstützeinrichtung 7 noch der Gabelsteuerabschnitt 28 angeordnet, der eine Durchströmöffnung 29 aufweist, die zu der Durchströmöffnung 10 der Steuerstützeinrichtung 7 ausgerichtet ist, um die von vorn auftreffende Luft strömungsgünstig durch den Gabelsteuerabschnitt 28 und die Steuerstützeinrichtung 7 durchzuleiten.

Im Bereich der Durchströmöffnung 10, die sich hier in Längsrichtung 12 erstreckt, weist die Steuerstützeinrichtung 7 seitliche Steuerrohre 13 und 14 oder Steuerabschnitte auf, die die nötige Stabilität der Steuerstützeinrichtung 7 gewährleisten. Gleichermaßen ist in dem Gabelsteuerabschnitt 28 eine Durchströmöffnung 29 vorgesehen, wobei der Gabelsteuerabschnitt 28 durch ein linkes Gabelsteuerrohr 31 und ein rechtes Gabelsteuerrohr 32 im Bereich der Durchströmöffnung 29 getragen wird.

In einer Vorderansicht weist sowohl die Durchströmöffnung 10 der Steuersteuereinrichtung 7 und die Durchströmöffnung 29 des Gabelsteuerabschnitts 28 eine längliche und abgerundete bzw. etwa ovale Struktur auf, um eine strömungsgünstige Luftleitung zu ermöglichen.

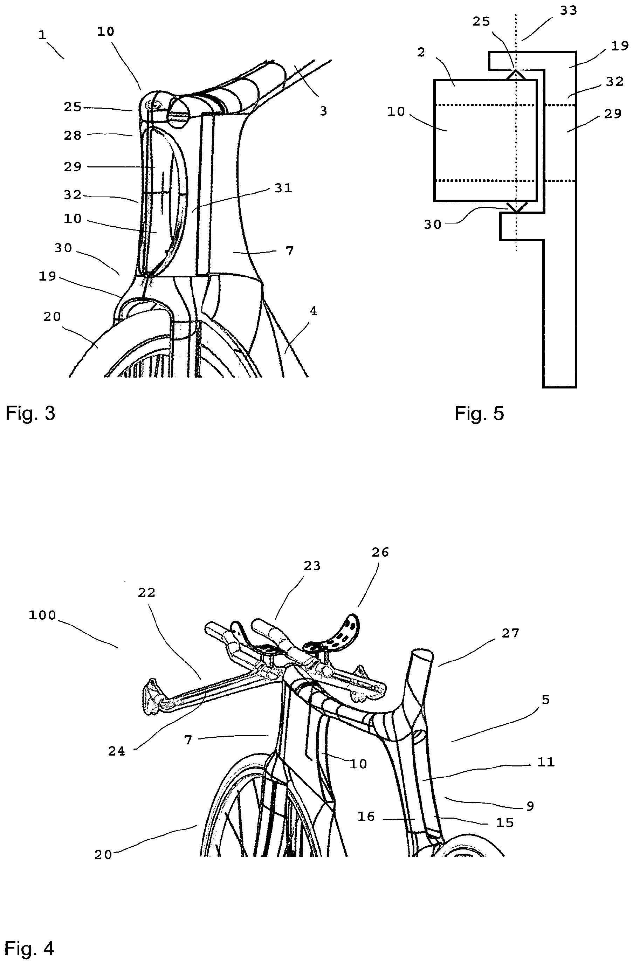

Figur 3 zeigt eine schematische perspektivische Darstellung der Gabel 19 an der Steuerstützeinrichtung 7, wobei die Durchströmöffnung 10 der Steuerstützeinrichtung 7. und die Durchströmöffnung 29 der Gabel 19 erkennbar sind. Der Gabelsteuerabschnitt 28 ist drehbar an dem Steuerstützabschnitt 7 gelagert. Das bedeutet, dass sich die Ausrichtung der Durchströmöffnung 29 der Gabel 19 bei Kurvenfahrten ändert. Das ist von Vorteil, da somit jederzeit die von vorn auftreffende Luft durch die Durchströmöffnung 29 zu der Durchströmöffnung 10 und durch diese hindurchgeleitet wird, sodass von vorn in diesem Bereich auftreffende Luft nicht luftwiderstandserhöhend in Richtung der Beine des Fahrers umgelenkt wird.

Zur drehbaren Lagerung der Fahrradgabel 19 sind ein oberes Lager 25 und ein unteres Lager 30 vorgesehen.

Eine stark schematische Prinzipskizze der Gabelaufhängung zeigt Figur 5. Dort ist dargestellt, dass beispielsweise die Gabel 19 den Steuerstützabschnitt 7 gabelförmig oder y-förmig übergreift, sodass die Gabel 19 drehbar an den Lagern 25 und 30 um die Drehachse 33 gelagert aufgenommen ist. Gleichzeitig sind die Durchströmöffnungen 29 und 10 zueinander ausgerichtet, sodass auftreffende Luft durch die beiden Öffnungen strömungsgünstig durchgeleitet wird.

Die hintere Stützeinrichtung 5, die als Sitzstützeinrichtung 9 ausgeführt ist, weist ebenfalls eine Durchströmöffnung 11 auf. Dies ist gut ersichtlich in Figur 4 dargestellt, die eine hintere perspektivische Teilansicht des Fahrrads 1 zeigt. Die hintere Durchströmöffnung 11 kann sich über den wesentlichen Bereich bzw. die wesentliche Erstreckung zwischen dem Hinterrad 21 und dem oberen Ende der Sitzstützeinrichtung 9 erstrecken. Durch die Durchströmöffnung 11 wird die von vorn vor der Durchströmöffnung 11 durchgeleitete Luft weiter abtransportiert, sodass ein zentraler Luftstrom entsteht, der unter weitgehender Vermeidung von Turbulenzen abtransportiert wird und nur einen geringen Luftwiderstand erzeugt, der erheblich niedriger als im Sand der Technik ist.

Die Sitzstützeinrichtung 9 weist im Bereich der Durchströmöffnung seitliche Wände oder Sitzrohre 15 und 16 auf, die die Durchströmöffnung 11 seitlich begrenzen.

Insgesamt stellt die Erfindung ein Fahrrad 100 zur Verfügung, welches an dem Rahmen 1 strömungsgünstige Durchströmöffnungen aufweist. In Weiterbildungen kann an dem oberen Steuerabschnitt der Gabel und es können an den Gabelbeinen Durchströmöffnungen vorgesehen sein und es kann der Lenker ebenfalls Luftleitöffnungen aufweisen. Insgesamt wird ein strömungsgünstiges Fahrrad zur Verfügung gestellt.

### Bezugszeichenliste:

- 1: Rahmen
- 2: Rahmenkörper
- 3: Oberrohr
- 4: Unterrohr
- 5: Stützeinrichtung
- 6: vorderer Bereich
- 7: Steuerstützeinrichtung
- 8: hinterer Bereich
- 9: Sitzstützeinrichtung
- 10: Durchstromöffnung
- 11: Durchstromöffnung
- 12: Längsrichtung
- 13: Steuerrohr
- 14: Steuerrohr
- 15: Sitzrohr
- 16: Sitzrohr
- 17: Sitzstrebe
- 18: Kettenstrebe
- 19: Gabel
- 20: Vorderrad
- 21: Hinterrad
- 22: Lenker
- 23: Aerostützen
- 24: Luftleiteinrichtung
- 25: Lager
- 26: Auflieger
- 27: Sattelstütze
- 28: Gabelsteuerabschnitt
- 29: Durchströmöffnung
- 30: Lager
- 31: linkes Gabelsteuerrohr
- 32: rechtes Gabelsteuerrohr
- 33: Drehachse
- 100: Fahrrad

## Patentansprüche

1. Rahmen (1) für ein Fahrrad (100) mit einem Rahmenkörper (2), wobei der Rahmenkörper (2) wenigstens ein Oberrohr (3) und wenigstens ein Unterrohr (4), sowie wenigstens eine das Oberrohr (3) und das Unterrohr (4) verbindende Stützeinrichtung (5) aufweist,
und wobei wenigstens eine Stützeinrichtung (5) eine Durchströmöffnung (10, 11) aufweist, durch welche im bestimmungsgemäßen Gebrauch wenigstens ein Teil der auftreffenden Luft durchströmt,
**dadurch gekennzeichnet, dass** in einem vorderen Bereich (6) des Rahmenkörpers (2) eine Steuerstützeinrichtung (7) als Stützeinrichtung (5) vorgesehen ist, und
dass wenigstens eine Durchströmöffnung (10, 11) an der Steuerstützeinrichtung (7) vorgesehen ist.

2. Rahmen (1) nach Anspruch 1, wobei sich die Durchströmöffnung (10, 11) in Längsrichtung (12) erstreckt.

3. Rahmen (1) nach Anspruch 1 oder 2, wobei der Rahmenkörper (2) aerodynamisch geformt ist.

4. Rahmen (1) nach mindestens einem der vorhergehenden Ansprüche, wobei in einem hinteren Bereich (8) des Rahmenkörpers (2) eine Sitzstützeinrichtung (9) als Stützeinrichtung (5) vorgesehen ist.

5. Rahmen (1) nach mindestens einem der vorhergehenden Ansprüche, wobei wenigstens eine Durchströmöffnung (10, 11) an der Sitzstützeinrichtung (9) vorgesehen ist und wobei insbesondere die Durchströmöffnungen (10, 11) an der Steuerstützeinrichtung (7) und an der Sitzstützeinrichtung (9) zueinander ausgerichtet sind.

6. Rahmen (1) nach mindestens einem der vorhergehenden Ansprüche, wobei die Steuerstützeinrichtung (7) aerodynamisch gestaltet ist und wenigstens zwei seitliche Steuerrohre (13, 14) umfasst, von denen jeweils wenigstens ein Steuerrohr (13, 14) auf jeweils einer Seite der Durchströmöffnung (10) angeordnet ist.

7. Rahmen (1) nach dem vorhergehenden Anspruch, wobei jedes Steuerrohr (13, 14) einen abgerundeten Querschnitt aufweist.

8. Rahmen (1) nach mindestens einem der vorhergehenden Ansprüche, wobei wenigstens eine Durchströmöffnung (10, 11) düsenartig gestaltet ist, sodass eine auftreffende Luftströmung durchgeleitet wird.

9. Rahmen (1) nach mindestens einem der vorhergehenden Ansprüche, wobei die Steuerstützeinrichtung ein oberes Lager (25) und ein unteres Lager (30) aufweist.

10. Rahmen (1) nach mindestens einem der vorhergehenden Ansprüche, wobei eine Gabeleinrichtung (19) mit einem oberen Gabelsteuerabschnitt (28)vorgesehen ist, an welchem insbesondere wenigstens eine Durchströmöffnung (29) vorgesehen ist, welche vorzugsweise seitlich von Gabelsteuerrohren (31, 32) der Gabeleinrichtung (19) begrenzt wird.

11. Rahmen (1) nach mindestens einem der vorhergehenden Ansprüche, wobei die Durchströmöffnung (29) des Gabelsteuerabschnitts (28) zu der Durchströmöffnung (10) der Steuerstützeinrichtung (7) ausgerichtet ist, um im bestimmungsgemäßen Gebrauch wenigstens ein Teil der auftreffenden Luft durch die Durchströmöffnungen (29, 10) des Gabelsteuerabschnitts (28) und der Steuerstützeinrichtung (7) zu leiten.

12. Rahmen (1) nach mindestens einem der vorhergehenden Ansprüche, wobei die Durchströmöffnung (11) der Sitzstützeinrichtung (9) zu der Durchströmöffnung (10) der Steuerstützeinrichtung (7) ausgerichtet ist, um im bestimmungsgemäßen Gebrauch wenigstens ein Teil der durch die Steuerstützeinrichtung (7) durchgeleiteten Luft durch die Durchströmöffnung (11) der Sitzstützeinrichtung (9) zu leiten.

13. Fahrrad (100) mit einem Rahmen (1) nach einem der vorhergehenden Ansprüche.

14. Fahrrad (100) nach Anspruch 13, wobei wenigstens eine Durchströmöffnung an der Gabel und/oder dem Lenker vorgesehen ist.

## Claims

1. Frame (1) for a bicycle (100) with a frame body (2) wherein the frame body (2) comprises at least one top tube (3) and at least one down tube (4), and at least one supporting device (5) connecting the top tube (3) with the down tube (4), and wherein at least one supporting device (5) comprises a flow-through opening (10, 11) through which when used as intended at least part of the arriving air flows, **characterized in that** a head supporting device (7) is provided in a front region (6) of the frame body (2) as a supporting device (5) and that at least one flow-through opening (10, 11) is provided at the head supporting device (7).

2. The frame (1) according to claim 1 wherein the flow-through opening (10, 11) extends in the longitudinal direction (12).

3. The frame (1) according to claims 1 or 2 wherein the frame body (2) is aerodynamic in shape.

4. The frame (1) according to at least one of the preceding claims wherein a seat supporting device (9) is provided in a rear region (8) of the frame body (2) as a supporting device (5).

5. The frame (1) according to at least one of the preceding claims wherein at least one flow-through opening (10, 11) is provided at the seat supporting device (9) and wherein in particular the flow-through openings (10, 11) at the head supporting device (7) and at the seat supporting device (9) are aligned with one another.

6. The frame (1) according to at least one of the preceding claims wherein the head supporting device (7) is aerodynamic in shape and comprises at least two lateral head tubes (13, 14), at least one of which head tubes (13, 14) is arranged to one side each of the flow-through opening (10).

7. The frame (1) according to the preceding claim wherein each head tube (13, 14) is rounded in cross-section (1).

8. The frame (1) according to at least one of the preceding claims wherein at least one flow-through opening (10, 11) is configured nozzle-like so as to guide an arriving air stream through.

9. The frame (1) according to at least one of the preceding claims wherein the head supporting device comprises an upper bearing (25) and a lower bearing (30).

10. The frame (1) according to at least one of the preceding claims wherein a fork device (19) with an upper steerer section (28) is provided where in particular at least one flow-through opening (29) is provided which is preferably laterally confined by steerer tubes (31, 32) of the fork device (19).

11. The frame (1) according to at least one of the preceding claims wherein the flow-through opening (29) of the steerer section (28) is aligned with the flow-through opening (10) of the head supporting device (7) so as to guide when used as intended at least part of the arriving air through the flow-through openings (29, 10) of the steerer section (28) and the head supporting device (7).

12. The frame (1) according to at least one of the preceding claims wherein the flow-through opening (11) of the seat supporting device (9) is aligned with the flow-through opening (10) of the head supporting device (7) so as to guide when used as intended at least part of the air guided through the head supporting device (7) through the flow-through opening (11) of the seat supporting device (9).

13. Bicycle (100) having a frame (1) according to any of the preceding claims.

14. The bicycle (100) according to claim 13 wherein at least one flow-through opening is provided at the fork and/or the handlebar.

## Revendications

1. Cadre (1) de bicyclette (100) pourvu d'un corps de cadre (2), ledit corps de cadre (2) présentant au moins un tube supérieur (3) et au moins un tube inférieur (4), ainsi qu'au moins un dispositif de support (5) reliant le tube supérieur (3) au tube inférieur (4),
et au moins un dispositif de support (5) présentant une ouverture de passage d'air (10, 11) au travers de laquelle passe, dans les conditions d'utilisation conformes aux spécifications, au moins une partie de l'air arrivant,
**caractérisé en ce**
**qu'**est prévu, dans une zone avant (6) du corps de cadre (2), un dispositif de support de commande (7) en tant que dispositif de support (5), et
**qu'**est prévue au moins une ouverture de passage d'air (10, 11) au niveau du dispositif de support de commande (7) .

2. Cadre (1) selon la revendication 1, l'ouverture de passage d'air (10, 11) s'étendant dans le sens longitudinal.

3. Cadre (1) selon la revendication 1 ou 2, le corps de cadre (2) étant de forme aérodynamique.

4. Cadre (1) selon au moins l'une quelconque des revendications précédentes, un dispositif de support d'assise (9) étant prévu en tant que dispositif de support (5) dans une zone arrière (8) du corps de cadre (2).

5. Cadre (1) selon au moins l'une quelconque des revendications précédentes, au moins une ouverture de passage (10, 11) étant prévue sur le dispositif de support d'assise (9) et notamment les ouvertures de passage d'air (10, 11) sur le dispositif de support de commande (7) et sur le dispositif de support d'assise (9) étant dirigées l'une vers l'autre.

6. Cadre (1) selon au moins l'une quelconque des revendications précédentes, le dispositif de support de commande (7) étant conçu aérodynamique et comprenant au moins deux tubes de commande latéraux (13, 14), dont au moins un tube de commande (13, 14) est agencé sur chacun des côtés de l'ouverture de passage d'air (10).

7. Cadre (1) selon la revendication précédente, chaque tube de commande (13, 14) présentant une section droite arrondie.

8. Cadre (1) selon au moins l'une quelconque des revendications précédentes, au moins une ouverture de passage d'air (10, 11) étant conçue sous forme de buse, de telle sorte qu'un flux d'air apparaissant est dirigé à travers celle-ci.

9. Cadre (1) selon au moins l'une quelconque des revendications précédentes, le dispositif de support de commande présentant un palier supérieur (25) et un palier inférieur (30).

10. Cadre (1) selon au moins l'une quelconque des revendications précédentes, un dispositif de fourche (19) étant prévu, pourvu d'un tronçon supérieur de commande à la fourche (28) sur lequel est prévu notamment au moins une ouverture de passage d'air (29) qui est limitée de préférence sur les côtés par des tubes de commande à la fourche (31, 32) du dispositif de fourche (19).

11. Cadre (1) selon au moins l'une quelconque des revendications précédentes, l'ouverture de passage d'air (29) du tronçon de commande à la fourche (28) étant dirigée vers l'ouverture de passage d'air (10) du dispositif de support de commande (7) pour diriger, dans les conditions d'utilisation conformes aux spécifications, au moins une partie de l'air incident au travers des ouvertures de passage d'air (29, 10) du tronçon de commande à la fourche (28) et du dispositif de support de commande (7).

12. Cadre (1) selon au moins l'une quelconque des revendications précédentes, l'ouverture de passage d'air (11) du dispositif de support d'assise (9) étant dirigée vers l'ouverture de passage d'air (10) du dispositif de support de commande (7) pour diriger au travers de l'ouverture de passage d'air (11) du dispositif de support d'assise (9), dans les conditions d'utilisation conformes aux spécifications, au moins une partie de l'air dirigé au travers du dispositif de support de commande (7).

13. Bicyclette (100) pourvue d'un cadre (1) selon l'une quelconque des revendications précédentes.

14. Bicyclette (100) selon la revendication 13, au moins une ouverture de passage d'air étant prévue à la fourche et/ou au guidon.
